# EUROPEAN PATENT APPLICATION

(11) **EP 2 950 259 A1**
(43) Date of publication of application: **02.12.2015**
(21) Application number: 15168828.0
(22) Date of filing: 22.05.2015
(51) Int. Cl.: G06Q 30/02, G09F 3/20

(54) **ELECTRONIC SHELF LABEL TAG, ELECTRONIC SHELF LABEL SYSTEM AND OPERATING METHOD THEREOF**

(30) Priority: 29.05.2014 KR 20140065439; 12.01.2015 KR 20150004102
(71) Applicant: Samsung Electro-Mechanics Co., Ltd., Gyeonggi-do (KR)
(72) Inventor: Choi, Byong Hyok, Gyeonggi-Do (KR); Park, Young Seo, Gyeonggi-Do (KR); Park, Jung Hwan, Gyeonggi-Do (KR); Seo, Bo Yle, Gyeonggi-Do (KR); Park, Jae Hee, Gyeonggi-Do (KR); Seo, Jeong Su, Gyeonggi-Do (KR); Ho, Hee Seok, Gyeonggi-Do (KR)
(74) Representative: Grünecker Patent- und Rechtsanwälte PartG mbB

(57) **Abstract**

An electronic shelf label tag includes a communications unit configured to perform wireless communications; a control unit configured to receive and store reservation data before a reserved display time by requesting the reservation data including display information corresponding to the reserved display time through the communications unit and control displaying of corresponding display information included in the reservation data when a current time reaches the reserved display time; a memory unit configured to store the reservation data including the display information corresponding to the reserved display time; and a time management unit configured to provide current time information to the control unit. The control unit may further receive reservation change information on corresponding reservation data before the reserved display time ends and applies the reservation change information to the corresponding reservation data.

## Description

### CROSS-REFERENCE TO RELATED APPLICATION

This application claims the benefit of Korean Patent Application Nos. 10-2014-0065439 filed on May 29, 2014 and 10-2015-0004102 filed on January 12, 2015, in the Korean Intellectual Property Office, the entire disclosures of which are incorporated herein by reference for all purposes.

### BACKGROUND

### 1. Field

The following description relates to an electronic shelf label tag, an electronic shelf label system, and an operating method thereof.

### 2. Description of Related Art

In general, a paper tag scheme in which product price information is manually written or printed on paper tags has been traditionally used as a scheme for displaying product information for customers on product display stands. However, such a paper tag scheme is disadvantageous, in that paper tags need to be replaced whenever product price information is changed or the products on a product display stand are changed.

Research into and development of an electronic tag (hereinafter, referred to as an electronic shelf label (ESL) tag) capable of overcoming the disadvantages of paper tags have been conducted. Electronic shelf label tags have been applied to a number of product display stands. Such an electronic shelf label system, including a plurality of electronic shelf label tags, may be installed in a store.

However, situations may arise in which the prices of specific goods (or products) displayed in the store need to be simultaneously changed at a specific time.

In a case in which changes in the prices of products, collectively occur at a specific time, the products which prices are to be changed, the time of the change in the price, and a discount rate thereof may be set in advance. When the change in price is set to occur, a server generates data to be transmitted to the electronic shelf label tag and transmits the data to a plurality of electronic shelf label tags via a repeater (e.g., a gateway). However, since a transmission error may occur while the server is transmitting the data to thousands of electronic shelf label tags at the set specific time, it may be impossible for the plurality of electronic shelf label tags to simultaneously display the correct information.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An electronic shelf label tag includes a communications unit configured to perform wireless communications; a control unit configured to receive and store reservation data before a reserved display time by requesting the reservation data including display information corresponding to the reserved display time through the communications unit and control displaying of corresponding display information included in the reservation data when a current time reaches the reserved display time; a memory unit configured to store the reservation data including the display information corresponding to the reserved display time; and a time management unit configured to provide current time information to the control unit. The control unit may further receive reservation change information on corresponding reservation data before the reserved display time ends and applies the reservation change information to the corresponding reservation data.

According to another exemplary embodiment in the present disclosure, a method of operating an electronic shelf label apparatus may include: generating, by an electronic shelf label server, reservation data including display information corresponding to each reservation display time and transmitting the reservation data to an electronic shelf label repeater; receiving, by the electronic shelf label repeater, the reservation data, generating a wake-up frame, and transmitting a wake-up signal including the wake-up frame to an electronic shelf label tag; performing, by the electronic shelf label tag, a wake-up when receiving the wake-up signal and receiving the reservation data by requesting the reservation data from the electronic shelf label repeater; storing the received reservation data; receiving reservation change information on corresponding reservation data before a reserved display time ends and applying the reservation change information to the corresponding reservation data; and displaying the corresponding reservation data when a current time reaches the reserved display time.

### BRIEF DESCRIPTION OF DRAWINGS

FIG. 1 is a configuration diagram of an example of an electronic shelf label system;
FIG. 2 is a block diagram of an example of an electronic shelf label tag;
FIG. 3 is a view illustrating an example of a reservation display information of the electronic shelf label system;
FIG. 4 is an example of an operation flowchart of the electronic shelf label system;
FIG. 5 is an example of a relationship diagram of an electronic shelf label server, a scheduler, and a retail server;
FIG. 6 is a view illustrating an example of an operating method of an electronic shelf label system;
FIG. 7 is a view illustrating an example of a process of transmitting reservation data;
FIG. 8 is a view illustrating an example of a wake-up frame;
FIG. 9 is a view illustrating an example of a response frame of data information;
FIG. 10 is a view illustrating an example of a schedule update frame; and
FIG. 11 is a view illustrating an example of a time-multiplexing of a wake-up frame of an electronic shelf label repeater.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

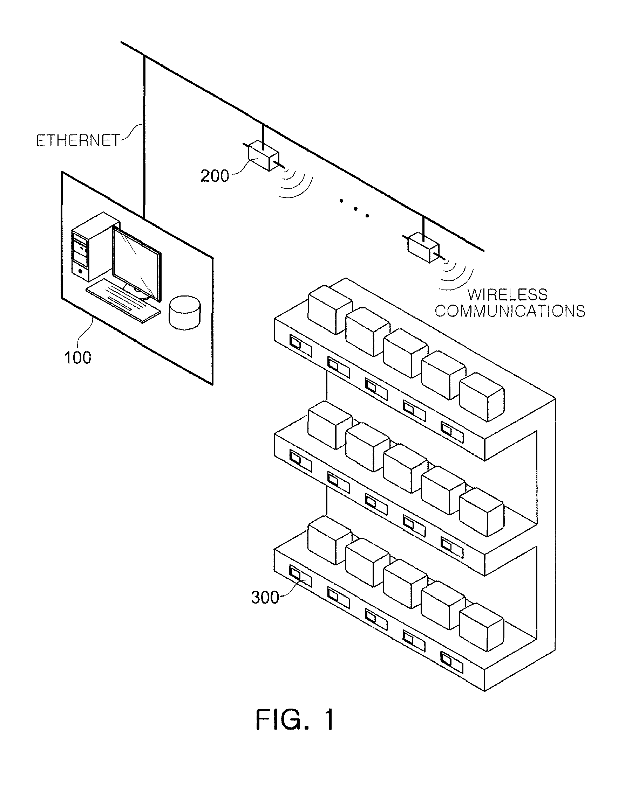

FIG. 1 is an example of a configuration diagram of an electronic shelf label system.

Referring to FIG. 1, an electronic shelf label system includes an electronic shelf label server 100 (e.g., an ESL server), a plurality of electronic shelf label repeaters 200 (e.g., gateways), and a plurality of electronic shelf label tags 300 (e.g., electronic tags).

In accordance with one configuration, the electronic shelf label server 100 is connected to the plurality of electronic shelf label repeaters 200 through a wired communications network (e.g., Ethernet), so as to generate reservation data including display information by the hour such as prices of goods (or products) and transmit the reservation data to the plurality of electronic shelf label repeaters 200. In one example, each of the plurality of repeaters 200 is connected to a plurality of electronic shelf label tag groups through a communications network and each of the plurality of electronic shelf label tag groups include a plurality of electronic shelf label tags.

In an example, each of the plurality of electronic shelf label repeaters 200 provides the reservation data together with reservation display time to the electronic shelf label tags 300 through a wireless communications network (e.g., wireless PAN communications). Here, the display information of the reservation data may be at least one of product related information, marketing information, and event information.

Meanwhile, each of the plurality of repeaters 200 may form a personal area network (PAN) communications network in order to separately perform wireless communications for each group including the plurality of electronic shelf label tags. Each of the plurality of electronic shelf label tag groups are identified from each other by identification (ID) such as group ID and the plurality of electronic shelf label tags may be identified from each other by identification (ID) such as a medium access control (MAC) address.

By way of example, the identification (ID) in the respective examples may be one of the group ID and the MAC address.

In accordance with one configuration, a communications standard of IEEE 802.15.4 may be applied to the electronic shelf label system. The server 100 may transmit the reservation data together with the reservation display time to the plurality of electronic shelf label tags 300 through the repeaters 200 using the communications network of the electronic shelf label system, and each of the plurality of electronic shelf label tags 300 may display the display information of corresponding reservation data on a screen at the transmitted reservation display time.

Each of the plurality of electronic shelf label tags 300 may receive a wake-up signal including the identification (ID) from the electronic shelf label repeaters 200 and may be woken-up in the case in which the identification (ID) included in the wake-up signal matches a self-identification (ID) of the electronic shelf label tag 300, so as to request data from the electronic shelf label repeaters 200. The electronic shelf label repeaters 200 may transmit the wake-up signal including a wake-up frame to the plurality of electronic shelf label tags 300 which are determined in advance through preset wake-up channels. The wake-up channels may be transmission channels through which the electronic shelf label repeaters 200 perform transmission to the electronic shelf label tags 300 in a broadcasting scheme.

In addition, the electronic shelf label tags 300 which are woken-up may request the data from the electronic shelf label repeaters 200 through data channels which are preset so as to be distinguished from the wake-up channels and may receive the data. Contents related to the wake-up channels and the data channels as described above may be applied to the respective examples.

In addition, the electronic shelf label tags 300 may receive and store the reservation data including the reservation display time and the display information, corresponding to the reservation display time, before the reservation display time from the server 100. Then, the electronic shelf label tags 300 may display the corresponding display information on a screen at the reservation display time.

As such, the electronic shelf label tags 300 may store the reservation data received through the repeaters from the server, if necessary. Then, the electronic shelf label tags 300 may change current display information to the corresponding display information included in the reservation data at the reservation display time.

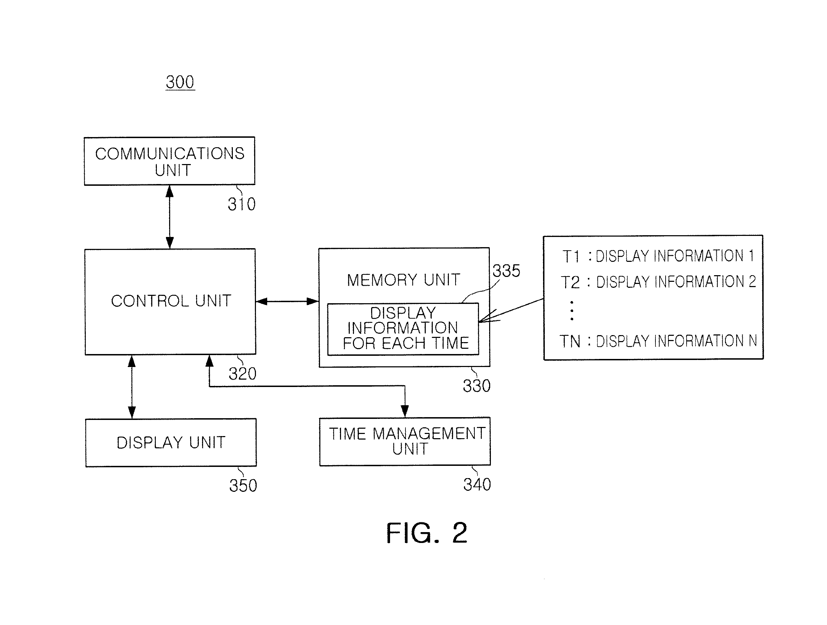

FIG. 2 is a block diagram of an example of an electronic shelf label tag.

Referring to FIG. 2, the electronic shelf label tag 300 includes a communications unit 310, a control unit 320, a memory unit 330, and a time management unit 340. The electronic shelf label tag 300 further includes a display unit 350. Although FIG. 2 illustrates the communications unit 310, the control unit 320, the memory unit 330, and the time management unit 340 included in the electronic shelf label tag 300, these components may be implemented as independent hardware. Therefore, the electronic shelf label tag 300 illustrated in FIG. 2 is not limited thereto and thus may include more or less components.

The communications unit 310 receives the wake-up signal by performing wireless communications with the electronic shelf label repeater 200 and receives the reservation data by requesting data.In accordance with a configuration, the communications unit 310 is a communications equipment such as a communications modem.

The control unit 320 receives and stores the reservation data before the reserved display time by requesting the reservation date including the display information corresponding to the reserved display time, through the communications unit 310 and outputs the display information of the corresponding reservation data on the screen of the display unit 350 when a current time reaches the reserved display time. The control unit 320 includes one of a processing unit such as a signal processor, microprocessor or CPU (Central Processing Unit), and a processing element implemented in the processing unit. As one example, the control unit 320 is a controller.

The memory unit 330 stores the reservation data including reservation data 335 for each time, corresponding to the reserved display time. As one example, the memory unit 330 is one of a flash memory, RAM, ROM and non-volatile memory. For example, the memory unit 330 includes display information 1 corresponding to a reserved display time T1, display information 2 corresponding to a reserved display time T2, and display information N corresponding to a reserved display time TN.

The time management unit 340 provides current time information to the control unit 320. In accordance with one configuration, the time managing unit 340 is a time managing controller.Also, in an example, the time management unit 340 includes its own precise clock.

Alternatively, the time management unit 340 receives precise time information from the electronic shelf label repeater 200 so as to correct an error of the current time information. In an example, the time information may be included in the wake-up frame. In this case, the electronic shelf label tag receives a wake-up signal including the wake-up frame and corrects the error of the current time using the time information included in the wake-up frame. Here, as an example, the repeater may always include accurate time information using a communications network such as the Internet.

In accordance with one configuration, the electronic shelf label tag 300 may autonomously calculate a reservation display time to be changed by periodically receiving absolute time information from the repeater 200. Accordingly, when it is time to change the information, the electronic shelf label tag 300 autonomously changes the display information of the reservation data without receiving additional instructions from the repeater 200.

In addition, the control unit 320 receives reservation change information for the display information of the corresponding reservation data before the reserved display time ends and applies the reservation change information to the corresponding reservation data.

In this case, the reservation change information may be one of a change of the reserved display time, a display reservation cancellation, a change of the display reservation data, and a change of the display information. Here, as long as the reservation change information is information changing prestored display information, the reservation change information is not particularly limited. Finally, the display unit 350 displays current display information or the corresponding reservation data.

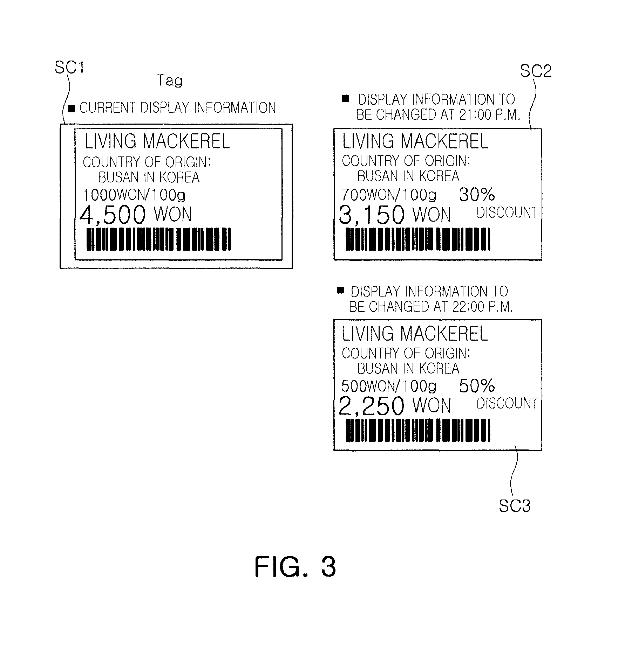

FIG. 3 is a view illustrating an example of reservation display information of the electronic shelf label system.

Referring to FIGS. 1 through 3, the display unit 350 displays current display information SC1 and the memory unit 330 stores reservation display information SC2 to be changed at 21:00 P.M. and reservation display information SC3 to be changed at 22:00 P.M.

Referring to FIGS. 1 through 3, in the case in which the same reservation data is transmitted to the plurality of electronic shelf label tags 300 in advance, a simultaneous price change may be performed, wherein each of the plurality of electronic shelf label tags 300 receives and stores the reservation data in advance.

As an example, the electronic shelf label tag 300 stores reservation data including the display information SC2 and SC3 to be changed at 21:00 P.M. and 22:00 P.M. while displaying information of a current normal price.

In this case, when the electronic shelf label tag 300 receives display information to be changed, the electronic shelf label tag 300 simultaneously receives information of reservation display time to be changed.

Thereafter, the electronic shelf label tag 300 autonomously calculates the reservation display time to be changed by periodically receiving absolute time information from the repeater 200. Accordingly, when it is time to change the display information, the electronic shelf label tag 300 autonomously changes the display information using the reservation data without receiving additional instructions from the repeater 200.

In accordance with an example, each of the plurality of electronic shelf label tags 300 receives the reservation data including the reservation display time and the display information corresponding to the reservation display time, before the reservation display time. Then, at the reservation display time, each of the electronic shelf label tags 300 simultaneously displays the display information of the reservation data on a screen.

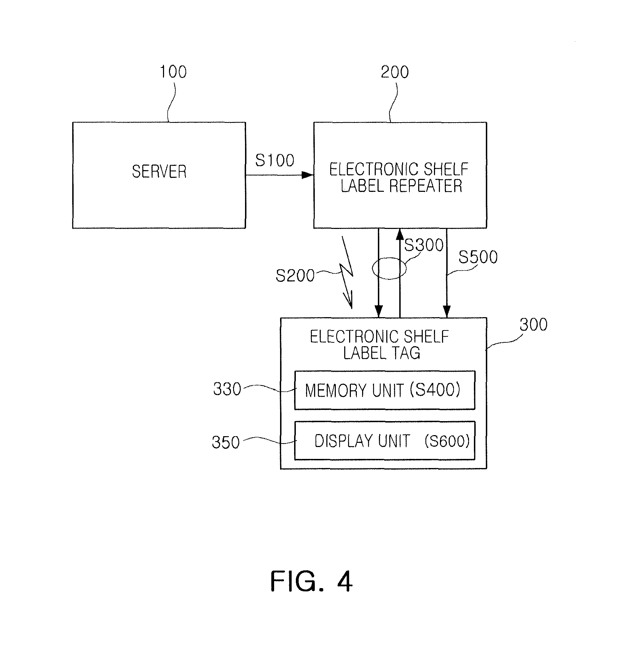

FIG. 4 is an operation flowchart of an example of an electronic shelf label system.

Referring to FIG. 4, the electronic shelf label system includes the electronic shelf label server 100, the electronic shelf label repeater 200, and the electronic shelf label tag 300.

Among the operations of the electronic shelf label server 100, the electronic shelf label repeater 200, and the electronic shelf label tag 300 illustrated in FIG. 4, a description of overlapping operations as those described with reference to FIGS. 1 through 3 will be omitted.

The electronic shelf label server 100 generates reservation data including display information to be transmitted to the electronic shelf label tag 300 before a display time and provides the reservation data to the electronic shelf label repeater 200 at operation S100.

The electronic shelf label repeater 200 receives the reservation data from the electronic shelf label server 100, generates a wake-up frame, and transmits a wake-up signal including the wake-up frame to the electronic shelf label tag 300 at operation S200.

If the electronic shelf label tag 300 receives the wake-up signal including identification (ID) from the electronic shelf label repeater 200, the electronic shelf label tag 300 is woken-up and requests the reservation data from the electronic shelf label repeater 200 so as to receive the reservation data at operation S300. The electronic shelf label tag 300 stores the received data in the memory unit 330 at operation S400 and displays the corresponding display information corresponding to the reservation display time on the display unit 350 using the display information (335 of FIG. 2) for each time included in the date stored in the memory unit 330.

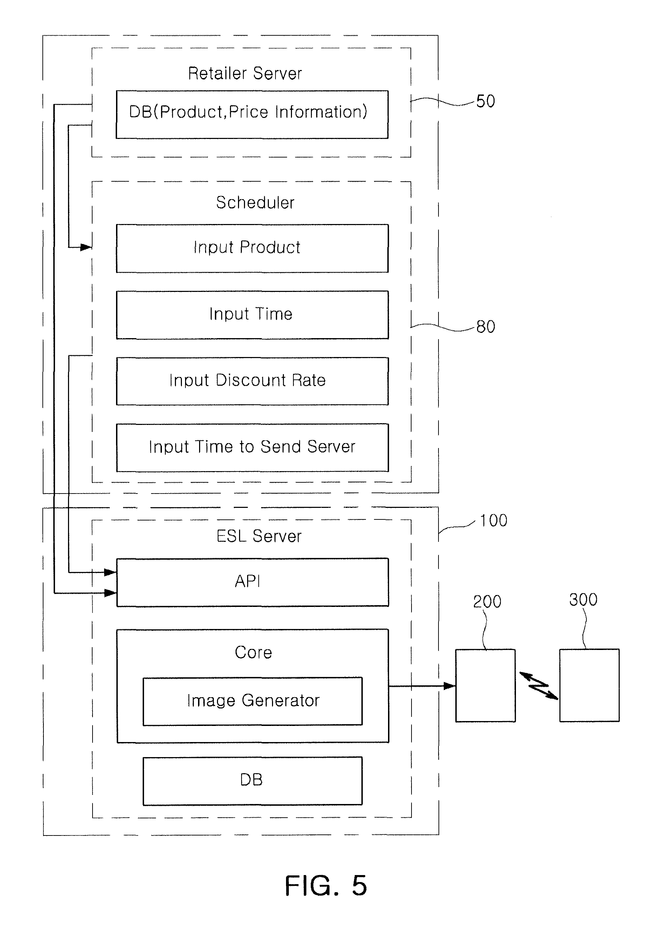

Here, an operation of requesting and receiving, by the electronic shelf label tag 300, the data from the electronic shelf label repeater 200 will be described with reference to FIGS. 5 through 10.

Meanwhile, the repeater 200 periodically informs current time information to the electronic shelf label tag 300 using the wake-up signal including the wake-up frame.

In this case, the electronic shelf label tag 300 calculates a reservation display change time based on the information of the reservation display change time and the current time information and changes the current display information to the corresponding display information of the reservation data using the reservation display change time. Alternatively, in another configuration each of the plurality of electronic shelf label tags include a clock. In this case, when the electronic shelf label tag initiates communications with the repeater, the electronic shelf label tag performs time-synchronization.

According to the scheme as described above, in the case in which each of the plurality of electronic shelf label tags 300 receives and stores the same reservation data in advance, when the change in the display information is simultaneously required, each of the plurality of electronic shelf label tags performs the information change on the display unit without error within several seconds at maximum.

As described above, if there is a plan to change the price, the server 100 transmits the reservation data including product information to be changed and a reservation display change time to the electronic shelf label tags 300 through the repeater 200, before a time (e.g., before several hours at minimum) at which the price change is desired.

FIG. 5 is a relationship diagram of an example of an electronic shelf label server, a scheduler, and a retail server.

Referring to FIGS. 1 through 5, in the electronic shelf label system according to an example, in order to change a price of a product, a server system including the electronic shelf label server 100 first determines a price change plan.

The server system includes a retailer server 50 and a scheduler 80 as well as the electronic shelf label server 100.

The retailer server 50 includes a database DB including product information and price information.

The scheduler 80 receives data including the price information and the product information from the retailer server 50 and includes receiving the product information to which a price change is to be applied in relation to the time based on the data, receiving a reservation display time to which a discount is to be applied, receiving a discount rate for each reservation display time, and receiving a time to be transmitted to a server in order to generate reservation data in advance for the price change.

Here, during the receiving of the time to be transmitted to a server in order to generate the reservation data in advance for the price change, if the price change is intended at 21:00 P.M., the scheduler 80 receives a transmission start time of when the server transmits the data. The electronic shelf label server 100 (ESL server) generates reservation data including the reservation display time and the display information corresponding to the reservation display time and transmits the reservation data to the electronic shelf label repeater 200 (gateway), in order to receive the data as described above from the scheduler 80 and transmit the data to the electronic shelf label tag 300.

In addition, the electronic shelf label display server 100 includes an application program interface as an interface for an information exchange with the retailer server or the scheduler 80, a reservation data generator (data or image generator) generating the reservation data using the reservation display time and the product information, and the database DB including information necessary to control a variety of electronic shelf labels such as the repeater and tag identification (ID) as well as the reservation display time and the product information.

As an example, the scheduler 80 is configured in a software module or a hardware apparatus. The scheduler 80 described above is configured in a physically independent structure and is configured to be included in one of the electronic shelf label server 100 and the retailer server 50.

The electronic shelf label repeater 200 transmits the data to each of the plurality of electronic shelf label tags at distributed data transmission times in order to prevent communications collision.

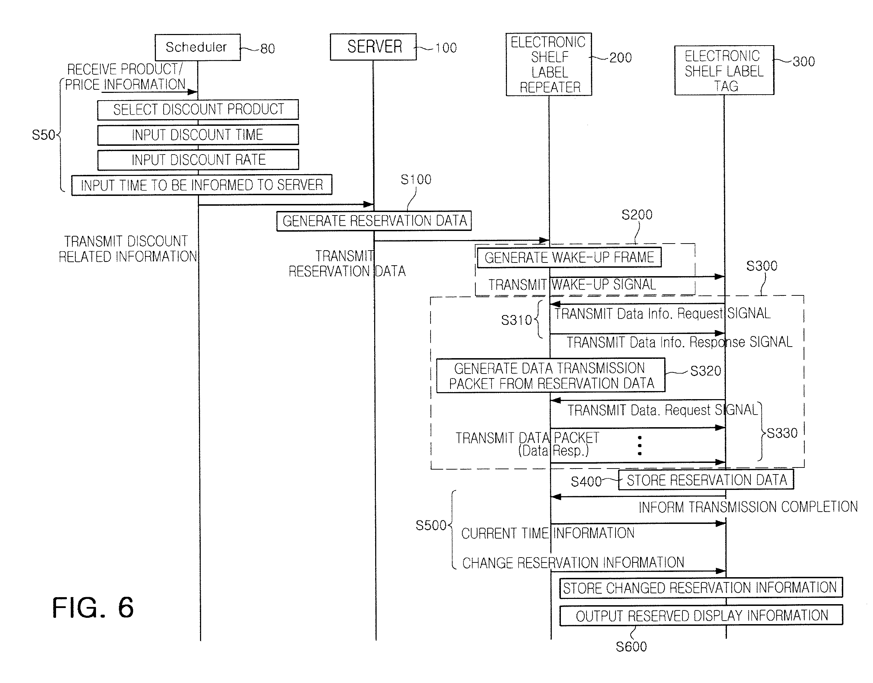

FIG. 6 is a view illustrating an example of an operating method of an electronic shelf label system.

A configuration of the operating method of the electronic shelf label system will be described with reference to FIGS. 1 through 6.

Hereinafter, in describing the operating method of the electronic shelf label system, the description for the operations performed with reference to FIGS. 1 through 5 may be applied thereto. Therefore, a detailed description overlapped with the description of the operating method of the electronic shelf label system will be omitted.

Referring to FIG. 6, the operating method of the electronic shelf label system according to an example includes operations S100 to S600.

First, in operation S100, the electronic shelf label server 100 generates reservation data including a reservation display time and display information corresponding to the reservation display time and transmits the reservation data to the electronic shelf label repeater 200.

In operation S200, the electronic shelf label repeater 200 receives the reservation data and generates the wake-up frame so as to transmit the wake-up signal to the electronic shelf label tag 300.

In operation S300, if the electronic shelf label tag 300 receives the wake-up signal, the electronic shelf label tag 300 is woken-up so as to request data from the electronic shelf label repeater 200 and receives the reservation data including the display information to which the reservation display time is matched.

In operation S400, the electronic shelf label tag 300 stores the received reservation data in an internal memory.

In operation S500, the electronic shelf label repeater 200 receives reservation change information for the corresponding reservation data before the reserved display time ends, so as to be applied to the corresponding reservation data. The reservation change information is at least one of a change of the reserved display time, a display reservation cancellation, a change of the display reservation data, and a change of the display information.

In addition, in operation S600, when a current time reaches the reserved display time, the electronic shelf label tag 300 displays the corresponding reservation data.

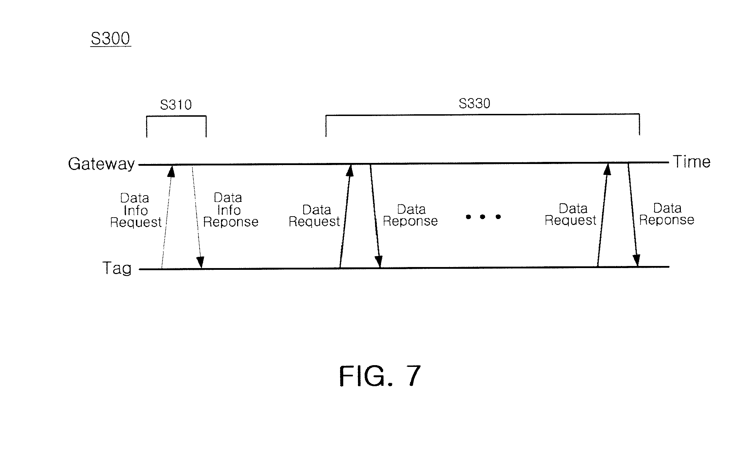

FIG. 7 is a view illustrating an example of a process of transmitting reservation data.

A detailed example of operation S300 will be described with reference to FIGS. 6 and 7. First, if the electronic shelf label tag 300 transmits a data information request (Data Info. Request) signal including the information on the data to be transmitted to the repeater 200, the repeater 200 transmits a data information response (Data info. Response) signal to the electronic shelf label tag 300 in response to the data information request signal in operation S310. Here, the repeater 200 may generate a data transmission packet based on the reservation data in operation S320.

Next, if the electronic shelf label tag 300 transmits a data request signal to the repeater 200 based on the data information response signal, the repeater 200 transmits a data transmission packet signal in response to the data request signal in operation S330.

As an example, in the case in which a total data is not transmitted to all of the electronic shelf label tags 300 by only a single packet transmission due to a limit of a size of payload of the data transmission packet, the repeater 200 transmits the total data to the electronic shelf label tag 300 by transmitting several data transmission packets many times. In this case, information such as a total number of data packets, a total data size, a compressed data size, and a compress mode are transmitted in advance through the data information response signal.

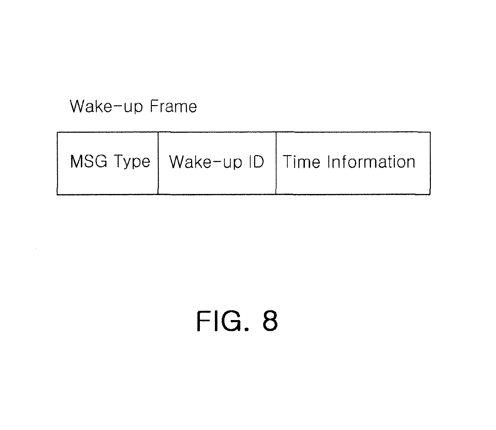

FIG. 8 is a view illustrating an example of a wake-up frame.

Referring to FIG. 8, as an example, the repeater 200 transmits a wake-up frame for 15 seconds, once per 300 seconds through a wake-up channel.

For example, the wake-up frame includes a message type (MSG type) informing the wake-up frame, a wake-up identification (ID) corresponding to identification (ID) of a wake-up target device, and accurate current time information for correcting error of a current time in the corresponding electronic shelf label tag.

In this case, in order to prevent collision between the wake-up frames in a wireless environment, each repeater uses a scheme in which its own wake-up frame is transmitted at different time slots.

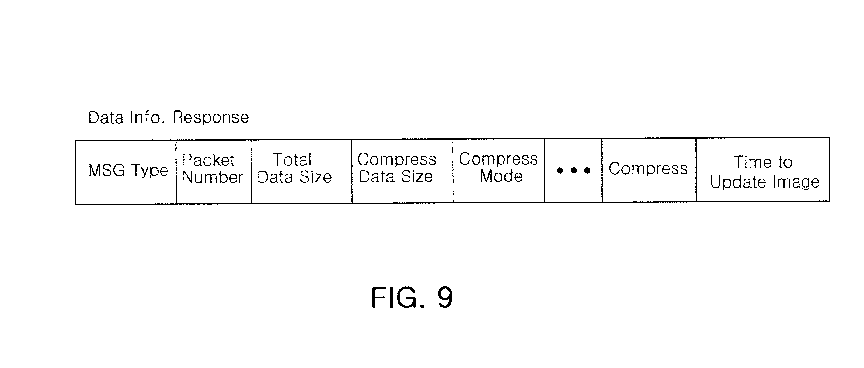

FIG. 9 is a view illustrating an example of a response frame of data information.

Referring to FIG. 9, the data information response (Data info. Response) signal includes time information (Time to Update Image) in which the data is to be actually displayed on the display unit of the electronic shelf label tag together with a total number of data packets to be transmitted, a total data size, a compressed data size, a compress mode, and checksum.

If the electronic shelf label tag 300 successfully receives the data, the electronic shelf label tag 300 calculates a reserved time to update reservation data (or an image or information) based on the current time information of the wake-up frame which is periodically received from the repeater 200 through the wake-up channel and displays the reservation data (or the image or information) on the screen at the corresponding reserved time.

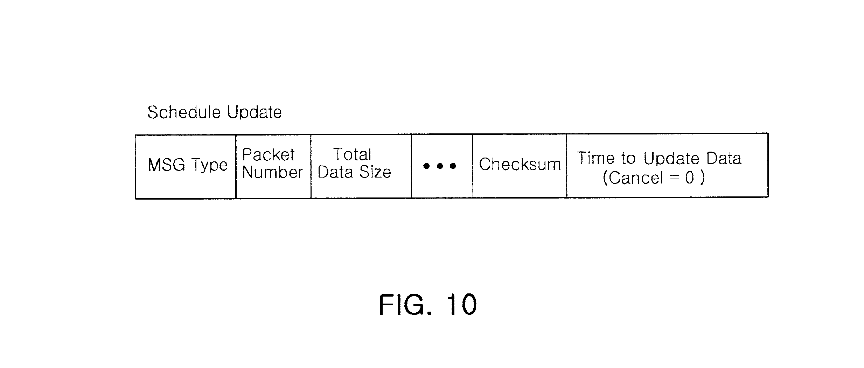

FIG. 10 is a view illustrating an example of a schedule update frame.

Referring to FIGS. 1 through 10, as described in operation S500, the reservation display time and the display information corresponding to the reservation display time which are included in the reservation data is changed or cancelled due to the change in various circumstances. In this case, the repeater 200 transmits a signal including the reservation change information to the electronic shelf label tag 300.

As an example, in the case in which the reservation display time for the reservation data which is already transmitted is intended to be changed or the display of the reservation data is intended to be cancelled, the repeater 200 transmits a reservation information change signal including a schedule update frame illustrated in FIG. 10 to the electronic shelf label tag.

The repeater 200 transmits the reservation change information to the electronic shelf label tag through the schedule update frame. As an example, similar to the data update case, the repeater calls the electronic shelf label tag having need of the schedule change through the wake-up frame, and the corresponding electronic shelf label tag receiving the wake-up frame transmits the data information request (Data Info. Request) signal to the repeater through the data channel.

Therefore, the repeater receiving the data information request (Data Info. Request) signal transmits a changed reservation display time (Time to Update Data) through the schedule update frame. If the reserved data update is intended to be cancelled, the repeater sets the reservation display time (Time to Update Data) to a value of "0" and transmits the reservation display time set to the value of "0".

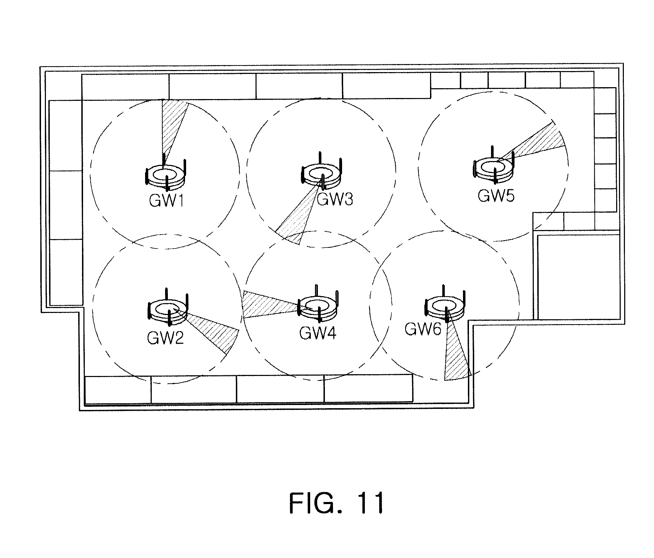

FIG. 11 is a view illustrating an example of a time-multiplexing of a wake-up frame of an electronic shelf label repeater.

Referring to FIGS. 8 and 11, as an example, the repeater transmits a wake-up frame for 15 seconds, once per 300 seconds through a wake-up channel.

In this case, in order to prevent collision between the wake-up frames in a wireless environment, each repeater uses a scheme in which its own wake-up frame is transmitted at different time slots.

On the other hand, an example of a scenario of a reservation update and the reservation update of the electronic shelf label system is as follows.
- collectively apply a discount rate of sale price -> change 20% to 100% of products (goods) in the store
- each sale price is determined before the next day or several hours
- the hour in which the sale price is reflected to a tag (electronic shelf label tag) to be displayed is determined
- in the present case, the sale price is reflected for each tag (electronic shelf label tag) at the time of the whole update
- a difference of 1 hour or more at maximum may occur in the hour

According to the example as described above, the reservation data to be updated is transmitted before about 1 hour so as to be stored in the memory of the electronic shelf label tag, the plurality of electronic shelf label tags may all simultaneously perform a price update by changing pages at the same time at a defined time, and the reservation data as described above is changed before the reservation time ends.

As set forth above, according to an example, since the electronic shelf label tags receive and store the reservation data in advance, thousands to tens of thousands electronic shelf label tags may simultaneously change the display information such as a price update within error of several seconds at maximum in the case in which the change in the price is required.

The apparatuses, units, modules, devices, and other components illustrated in FIGS. 1, 2, 4, 5, and 11 that perform the operations described herein with respect to FIGS. 3, 6, and 7 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 3, 6, and 7. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 3, 6, and 7 that perform the operations described herein with respect to FIGS. 1, 2, 4, 5, and 11 are performed by a processor or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. An electronic shelf label tag comprising: a communications unit configured to perform wireless communications;
a control unit configured to receive and store reservation data before a reserved display time by requesting the reservation data including display information corresponding to the reserved display time through the communications unit and control displaying of corresponding display information included in the reservation data when a current time reaches the reserved display time;
a memory unit configured to store the reservation data including the display information corresponding to the reserved display time; and
a time management unit configured to provide current time information to the control unit,
wherein the control unit receives reservation change information on corresponding reservation data before the reserved display time ends and applies the reservation change information to the corresponding reservation data.

2. The electronic shelf label tag of claim 1, wherein the reservation change information is at least one of a change of the reserved display time, a display reservation cancellation, a change of display reservation data, and a change of the display information.

3. The electronic shelf label tag of claim 1, wherein the time management unit receives time information from an electronic shelf label repeater and updates the current time information.

4. An electronic shelf label apparatus comprising:
an electronic shelf label server generating and providing reservation data;
an electronic shelf label repeater receiving the reservation data from the electronic shelf label server, generating a wake-up frame, and transmitting a wake-up signal including the wake-up frame; and
an electronic shelf label tag which is woken-up when receiving the wake-up signal including identification (ID) from the electronic shelf label repeater and requesting data from the electronic shelf label repeater,
wherein the electronic shelf label tag includes:
a communications unit configured to perform wireless communications with the electronic shelf label repeater;
a control unit configured to receive and store the reservation data before a reserved display time by requesting the reservation data including display information corresponding to the reserved display time through the communications unit and control displaying of corresponding display information included in the reservation data when a current time reaches the reserved display time;
a memory unit configured to store the reservation data including the display information corresponding to the reserved display time; and
a time management unit configured to provide current time information to the control unit,
wherein the control unit is further configured to receive reservation change information on corresponding reservation data before the reserved display time ends and allowing the reservation change information to be applied to the corresponding reservation data.

5. The electronic shelf label apparatus of claim 4, wherein the reservation change information is at least one of a change of the reserved display time, a display reservation cancellation, a change of display reservation data, and a change of the display information.

6. The electronic shelf label apparatus of claim 4, wherein the time management unit receives time information from the electronic shelf label repeater and updates the current time information.

7. The electronic shelf label apparatus of claim 4, wherein the electronic shelf label repeater transmits the data to a plurality of respective electronic shelf label tags at distributed data transmission times.

8. A method of operating an electronic shelf label apparatus, the method comprising:
generating, by an electronic shelf label server, reservation data including display information corresponding to each reservation display time and transmitting the reservation data to an electronic shelf label repeater;
receiving, by the electronic shelf label repeater, the reservation data, generating a wake-up frame, and transmitting a wake-up signal including the wake-up frame to an electronic shelf label tag;
performing, by the electronic shelf label tag, a wake-up when receiving the wake-up signal and receiving the reservation data by requesting the reservation data from the electronic shelf label repeater;
storing the received reservation data;
receiving reservation change information on corresponding reservation data before a reserved display time ends and applying the reservation change information to the corresponding reservation data; and
displaying the corresponding reservation data when a current time reaches the reserved display time.

9. The method of claim 8, wherein the reservation change information is at least one of a change of the reserved display time, a display reservation cancellation, a change of display reservation data, and a change of the display information.

10. The method of claim 8, wherein the time management unit receives time information from the electronic shelf label repeater and updates current time information.

11. The method of claim 8, wherein the electronic shelf label repeater transmits the reservation data to a plurality of respective electronic shelf label tags at distributed data transmission times.
